# EUROPÄISCHE PATENTSCHRIFT

(11) **EP 3 502 069 B1**
(45) Veröffentlichungstag und Bekanntmachung des Hinweises auf die Patenterteilung: **08.12.2021**
(21) Anmeldenummer: 18214319.8
(22) Anmeldetag: 20.12.2018
(51) Int. Cl.: C03C 3/087, C03C 3/097, C03C 10/00, F24C 15/10

(54) **GLASKERAMIK MIT REDUZIERTEM LITHIUM-GEHALT**
GLASS CERAMIC WITH REDUCED LITHIUM CONTENT
VITROCÉRAMIQUE À TENEUR EN LITHIUM RÉDUITE

(30) Priorität: 22.12.2017 DE 102017131067; 07.05.2018 DE 102018110855
(43) Veröffentlichungstag der Anmeldung: 26.06.2019
(73) Patentinhaber: SCHOTT AG, 55122 Mainz (DE)
(72) Erfinder: WEISS, Evelin, 55131 Mainz (DE); SCHNEIDER, Meike, 65232 Taunusstein (DE); HOCHREIN, Oliver, 55130 Mainz (DE); SIEBERS, Friedrich, 55283 Nierstein (DE); DUDEK, Roland, 55545 Bad Kreuznach (DE); MUELLER, Martin, 64285 Darmstadt (DE); BOCKMEYER, Matthias, 55116 Mainz (DE); DÖRK, Birgit, 55128 Mainz (DE)
(74) Vertreter: Blumbach · Zinngrebe Patentanwälte PartG mbB

(56) Entgegenhaltungen:
- EP-A1- 2 724 995
- EP-A1- 2 817 265
- WO-A1-2018/224556
- DE-A1-102014 226 986
- DE-A1-102016 211 065
- US-A1- 2013 178 353

## Beschreibung

### Gebiet der Erfindung

Die Erfindung betrifft eine transparente, gefärbte Glaskeramik, welche für die Verwendung als Kochfläche geeignet ist.

### Hintergrund der Erfindung

Glaskeramik-Kochflächen und die dafür verwendeten Glaskeramiken sind seit vielen Jahren bekannt. In der Regel werden Lithiumalumosilikat (LAS)-Glaskeramiken verwendet, die entweder Hochquarz-Mischkristall, insbesondere für transparente Materialien, oder Keatit-Mischkristall, insbesondere für transluzente oder opake Materialien, als Hauptkristallphase enthalten. Die für die Verwendung als Kochfläche wesentliche Eigenschaft dieser Materialien, über eine sehr geringe thermische Ausdehnung im Bereich von Raumtemperatur bis 700°C und darüber zu verfügen, wird durch die Kombination von Kristallphasen mit negativer thermischer Ausdehnung und einer amorphen Restglasphase mit positiver thermischer Ausdehnung erhalten. Um dies zu erreichen, muss der Gehalt an Kristallphase ausreichend hoch, in der Regel größer als 50 %, bevorzugt sogar größer 60 % sein. Bei den bisher verwendeten Glaskeramiken wird dafür ein Lithiumanteil von üblicherweise 4 bis 5 Gewichtsprozent verwendet.

Wenn für Kochflächen transparente Glaskeramiken mit der Hauptkristallphase Hochquarz-Mischkristall verwendet werden, so werden sie entweder durch Zugabe von Farboxiden eingefärbt oder mit einer Unterseitenbeschichtung versehen, um die unter der Kochfläche liegenden technischen Installationen optisch zu kaschieren. Für die Färbung der Glaskeramik können verschiedene Farboxide verwendet werden, wobei einige davon, wie zum Beispiel CoO, NiO, Nd₂O₃ oder CuO auf Grund ihrer hohen Rohstoffkosten den Preis der Glaskeramiken deutlich erhöhen können.

Während früher hauptsächlich die aus der Glasindustrie bekannten Läutermittel Arsen- und oder Antimonoxid eingesetzt wurden, werden heutzutage aus Gründen des Umwelt- und Arbeitsschutzes bevorzugt andere, weniger toxische Alternativen wie Zinnoxid (SnO₂) als Läutermittel eingesetzt.

Transparente Glaskeramiken, die optional mit V₂O₅ gefärbt werden können, sind in der DE 1796298 A1 beschrieben. Hier werden bevorzugt die Farboxide NiO und CoO eingesetzt, eine Färbung ausschließlich mit V₂O₅ wird nur in Verbindung mit ZnS offenbart, da rot-gefärbte Glaskeramiken erzeugt werden sollen.

Eine Färbung mit V₂O₅, Cr₂O₃ und CoO bzw. CuO ist in den Druckschriften US 4526872 A, JP 6086311 B4 und EP 2435378 B1 beschrieben.

Gefärbte Glaskeramiken mit geringem Lithiumgehalt sind in der DE 3345316 A1 zur Herstellung von gefärbten Ofensichtscheiben beschrieben. Hier wird bei einer Färbung mit Vanadiumoxid mindestens 0,1 % Gewichtsprozent eingesetzt, ebenso wie in der deutschen Patentschrift DE19939787 C2 und in dem europäischen Patentschrift EP 1313675 B2, die eine mit V₂O₅ gefärbte und mit SnO₂ geläuterte Glaskeramik für Kochflächen offenbaren.

Die japanischen Patentanmeldungen JP 11100229 A und JP 11100230 A beschreiben mit Vanadiumoxid gefärbte Glaskeramiken, die mit SnO₂ und optional mit Cl-Zusatz geläutert werden.

Keramisierbare Gläser zur Herstellung von Glaskeramiken, die optional mit V₂O₅ gefärbt sein können, sind auch aus der EP1398303 B1 bekannt. Die darin beschriebenen Zusammensetzungen werden mit As₂O₃ oder Sb₂O₃ geläutert.

Ein Zusatz von 0,05 bis 1 Gewichtsprozent Fluor (US 20070004578 A1) und 0,01 bis 1 Gewichtsprozent Brom (US 20080026927 A1) zur Unterstützung der Läuterung mit SnO₂ wird ebenfalls offenbart. Der Zusatz von Halogeniden ist jedoch nachteilig, da sie bei der Schmelztemperatur stark verdampfen und dabei toxische Verbindungen wie HF bilden können.

Eine Läuterung mit Hilfe der Kombination SnO₂ und CeO₂ und/oder MnO₂ wird in der Anmeldung US 2007129231 A beschrieben. Hierfür sind jedoch 0,7 bis 1,5 % CeO₂ oder MnO₂ notwendig. Da diese beiden Komponenten jedoch deutlich höhere Rohstoffpreise haben als SnO₂ ist der ökonomische Nutzen fraglich.

Die Färbung einer Glaskeramik mit geringeren Mengen an V₂O₅ im Bereich von 0,003 bis 0,7 Gewichtsprozent wird in der DE 102008040097 B4 dargestellt.

Transparente Glaskeramiken mit einer besonders eingestellten Lichttransmission bei bestimmten Wellenlängen werden ebenfalls im Stand der Technik beschrieben, beispielsweise in der DE 102008050263 B4 und der DE 102009013127 B4). Dafür wird bevorzugt eine Kombination verschiedener Farboxide mit V₂O₅ eingesetzt, wie CoO, Nd₂O₃, NiO.

Glaskeramiken mit V₂O₅ als Farboxid und Fe₂O₃, NiO und MnO als Ko-Färbemittel werden in der US 8765619 offenbart.

Auch die Kombination von Vanadiumoxid mit CoO für die Färbung von Glaskeramikkochflächen wurde vorgeschlagen (WO 1013700 A1). Auch hier ist jedoch gegenüber der Färbung mit V₂O₅ ohne CoO Zugabe ein höherer Gemengepreis zu erwarten.

Eine Anzeigeanordnung mit einer Glaskeramik, die 100 bis 2000 ppm V₂O₅ und 0,1 bis 0,5 Gewichtsprozent SnO₂ enthalten kann, wird in der US-Schrift US 2013070451 A beschrieben. Eine Reduktion von Li₂O ist im Beispiel beschrieben, allerdings bei einem geringen BaO-Gehalt von 0,8 Gewichtsprozent und einem MgO-Gehalt von 1,3 Gewichtsprozent, was einen für Kochflächenanwendungen ungünstigen Ausdehnungskoeffizienten erwarten lässt.

Hochquarz-Glaskeramiken, die besonders im Hinblick auf die Läuterung mit SnO₂ optimiert sind, offenbart die WO 11089220 A1. Hier wird bevorzugt CoO neben V₂O₅ als Ko-Färber eingesetzt.

Eine Glaskeramik für Kochflächen, die V₂O₅ als Färbemittel und SnO₂ als Läutermittel enthält und einen Lithiumgehalt von 3,5 Gewichtsprozent wird beispielhaft in der Anmeldung US 2013098903 A dargestellt. Diese Glaskeramik hat einen SiO₂-Anteil von 69,9 Gewichtsprozent. Dieser SiO₂ Anteil erhöht die Schmelztemperatur, mit der Folge, dass höhere Energiekosten für die Schmelze entstehen.

Gefärbte Kochflächen mit einem Lithiumgehalt von 1,5 bis 4,2 Gewichtsprozent und SnO₂ Läuterung werden auch in der PCT-Anmeldung WO 12010278 A1 vorgeschlagen. Hier wird eine Kombination von mindestens zwei Farboxiden verwendet.

Das US-Patent US 8722554 B offenbart eine mit V₂O₅ gefärbte Glaskeramik, die besonders für die Läuterung mit SnO₂ optimiert ist. Hierfür werden beispielhaft Zusammensetzungen mit einem Li₂O Gehalt von mehr als 3,7 Gewichtsprozent genannt.

Die US 2013/0178353 A1 offenbart eine Glaskeramik, die eine Beta-Quarz-Glaskeramik als kristalline Hauptphase enthält, wobei ihre Zusammensetzung insbesondere hinsichtlich der Veredelung von Vorstufengläsern, hinsichtlich einer guten Beständigkeit gegen Entglasung der Vorstufengläser und hinsichtlich ihrer Temperaturalterungsbeständigkeit optimiert ist, Gegenstände aus solchen Glaskeramiken, Lithium-Aluminium-Silikat-Gläser mit 0,5 bis 1,5 Gew.-% MgO und Vanadiumoxid und Cobaltoxid als Farbstoffe.

Die EP 2 724 995 A1 offenbart eine transparente, eingefärbte Kochfläche mit verbesserter farbiger Anzeigefähigkeit, bestehend aus einer Glaskeramik mit Hochquarz-Mischkristallen als vorherrschender Kristallphase, wobei die Glaskeramik, bis auf unvermeidliche Spuren, keines der chemischen Läutermittel Arsenoxid und/oder Antimonoxid enthält. Die Glaskeramik enthält bevorzugt 0,01 bis 0,06 Gew.-% V₂O₅ und 0,03 bis 0,2 Gew.-% Fe₂O₃.

Die EP 2 817 265 A1 betrifft ein Verfahren zur Herstellung von Lithium-Alumo-Silicat-Glaskeramiken, die auch Fe₂O₃ und V₂O₅ enthalten können.

Die WO 2018/224556 A1 offenbart Beta-Quarz-Glaskeramiken mit einem hohen Zinkgehalt und V₂O₅ als Färbemittel allein oder gemischt mit Färbemitteln, ausgewählt aus CoO, Cr₂O₃ und Fe₂O₃.

Die DE 10 2016 211 065 A1 betrifft eine transparente, vorzugsweise mit Hilfe von Farboxiden eingefärbte Glaskeramik mit einer oberflächennahen Schicht eine Dicke von mindestens 10 Mikrometer und einem darunterliegenden Kern, wobei der Kern als Hauptkristallphase Keatit-Mischkristalle umfasst und in einer Tiefe ab 100 Mikrometer vorliegt, und die Glaskeramik mindestens 0,1 bis 4% B₂O₃ enthält. Die Glaskeramik enthält bevorzugt 0,01 bis 0,06 Gew.-% V₂O₅ und 0,012 bis 0,3 Gew.-% Fe₂O₃.

Die DE 10 2014 226 986 A1 beansprucht ein glaskeramisches Substrat aus einer transparenten, eingefärbten LAS-Keramik mit 0,01 bis 0,06 Gew.-% V₂O₅ und 0,03 bis 0,2 Gew._% Fe₂O₃ und gegebenenfalls weitere Farboxide, in Summe bis maximal 1,0 Gew.-%, mit einer Gradientenschicht und einem darunter liegenden Kern, wobei die LAS-Glaskeramik im Kern Keatitmischkristall (KMK) als vorherrschende Kristallphase und in der Gradientenschicht Hochquarzmischkristall (HQMK) als vorherrschende Kristallphase aufweist und wobei der KMK-Kristallphasenanteil in einer Tiefe von 10 µm oder mehr 50% der Summe der HQMK- und KMK-Kristallphasenanteile übersteigt.

### Aufgabe der Erfindung

Die Aufgabe der Erfindung besteht in der Bereitstellung einer transparenten, gefärbten Glaskeramik, welche gute Schmelzeigenschaften des Grünglases aufweist und kostengünstig ist, ohne dass dadurch Einschränkungen in den Gebrauchseigenschaften entstehen.

Die Glaskeramik soll insbesondere allen Anforderungen für den Gebrauch als Kochfläche genügen, wie niedrige thermische Ausdehnung, ausreichende chemische Beständigkeit, Temperaturwechselbeständigkeit und Temperatur-Langzeitbeständigkeit sowie eine angepasste optische Transmission.

### Zusammenfassung der Erfindung

Die Aufgabe der Erfindung wird gelöst durch den Gegenstand des Anspruchs 1. Bevorzugte Ausführungen und Weiterbildungen finden sich in den abhängigen Ansprüchen.

Die erfindungsgemäße transparente, gefärbte Glaskeramik, insbesondere eine LAS-Glaskeramik, enthält Hochquarz-Mischkristall (HQMK) als Hauptkristallphase und eine thermische Ausdehnung von - 1 bis +1 ppm/K, bevorzugt -0,6 bis +0,6 ppm/K und besonders bevorzugt - 0,5 bis +0,5 ppm/K im Bereich von 20°C bis 700°C.

Damit wird eine ausreichende Temperaturwechselbeständigkeit gewährleistet.

Damit, dass die erfindungsgemäße Glaskeramik Hochquarz-Mischkristall als Hauptkristallphase enthält, ist gemeint, dass der Anteil von Hochquarz-Mischkristall als Kristallphase mehr als 50% der insgesamt vorhandenen Kristallphasen beträgt.

Zudem enthält die erfindungsgemäße Glaskeramik als Bestandteil 3,0 bis 3,6 Li₂O Gewichtsprozent Lithiumoxid (Li₂O). Dadurch kann der Herstellungspreis der Glaskeramik reduziert werden.

Des Weiteren ist für die erfindungsgemäße Glaskeramik 0,003 bis 0,25 Gewichtsprozent Molybdänoxid (MoO₃) als Farboxid eingesetzt.

Mit Molybdänoxid (MoO₃) ist eine kostengünstige Herstellung möglich. Molybdänoxid hat zudem im sichtbaren Bereich einen flacheren Transmissionsverlauf, was vorteilhaft für weiße Leuchtelemente ist.

Da andere Farboxide, wie CoO, NiO, Nd₂O₃ oder CuO, auf Grund ihrer hohen Rohstoffkosten den Preis der Glaskeramiken deutlich erhöhen können, wird in der erfindungsgemäßen Glaskeramik die Färbung bevorzugt nur mit Hilfe von Molybdänoxid (MoO₃) erzeugt, wobei die genannten geringen Mengen für eine ausreichende Färbung genügen.

Der Einsatz von weiteren Farboxiden ist somit aus Kostenerwägungen in der Regel nicht sinnvoll. Der Einsatz von Farboxiden, die eine sehr starke Farbwirkung haben, wie CoO, NiO, Cr₂O₃ oder CuO kann außerdem Probleme mit unerwünschten Verunreinigungen oder Querkontaminationen mit sich bringen, da bereits geringe Mengen einen deutlichen Einfluss auf die resultierende Färbung haben. Die Menge dieser Farboxide sollte auf die durch Verunreinigungen eingetragenen Mengen begrenzt werden. Das entspricht den Mengen von CoO, NiO, Cr₂O₃, CuO oder Nd₂O₃ jeweils von 0 bis weniger als 0,01 Gewichtsprozent und bei MnO₂ von 0 bis weniger als 0,03 Gewichtsprozent.

Da auch mit MoO₃ als einziges Farboxid eine ausreichende Farbwirkung erzielt werden kann, kann auf den Einsatz der genannten Farboxide verzichtet werden.

Der im Vergleich zu konventionellen Glaskeramiken niedrigere Li₂O-Gehalt ermöglicht eine Reduktion der Rohstoffkosten, da sich die Kosten für Lithiumrohstoffe in den letzten Jahren aufgrund gestiegener Nachfrage, beispielsweise für Lithiumionenbatterien, deutlich erhöht haben. Für eine wirtschaftlich attraktive Herstellung von Glaskeramiken, insbesondere für Kochflächen, ist es daher von Vorteil, den hierfür erforderlichen Lithiumanteil abzusenken.

Eine Verringerung des Li₂O-Gehalts in einer Lithiumalumosilikat (LAS)-Glaskeramik kann jedoch zu einer Verringerung des Kristallphasengehalts und damit zu einer Erhöhung der thermischen Ausdehnung führen.

Dies kann durch Zugabe von Magnesiumoxid (MgO) kompensiert werden, bevorzugt im Bereich von bis weniger als 1 Gewichtsprozent.

Besonders bevorzugt enthält die Glaskeramik 0,3 bis weniger als 1 Gewichtsprozent MgO, ganz besonders bevorzugt bis 0,77 Gewichtsprozent MgO.

Um einer Erhöhung der thermischen Ausdehnung weiter entgegenzuwirken, kann in einer bevorzugten Ausführungsform Zinkoxid (ZnO) im Bereich von 1,2 bis 2,5 Gewichtsprozent hinzugegeben werden. Höhere ZnO-Zugaben als 2,5 Gewichtsprozent führen zur Bildung von Gahnit als unerwünschter Nebenphase.

Eine Verringerung der Erdalkalioxide kann jedoch gleichzeitig eine unerwünschte Erhöhung der Schmelztemperatur zur Folge haben. Durch die vorteilhafte Zugabe von BaO im Bereich von 1,2 bis 2,8 Gewichtsprozent lässt sich dieser Effekt verringern.

Somit kann die Wahl der oben genannten optimalen Gewichtsprozent-Bereiche für MgO und eine spezifische Zugabe von ZnO und BaO zur Anpassung der Viskosität und zur Absenkung der Schmelztemperaturen genutzt werden.

Die Kombination aus einem geringen Lithium-Gehalt mit der Färbung ausschließlich mit MoO₃ bei bevorzugter gleichzeitiger Absenkung des MgO-Gehalts auf weniger als 1 Gewichtsprozent und die potentielle Wahl der optimalen Gewichtsprozent-Bereiche für BaO mit einem Gehalt von 1,2 bis 2,8 Gewichtsprozent und die Zugabe von Zinkoxid (ZnO) im Bereich von 1,2 bis 2,5 Gewichtsprozent führen zur Optimierung von Schmelztemperatur und thermischer Ausdehnung sowie zu einer wirtschaftlich besonders günstigen Glaskeramik mit besonders guten Gebrauchseigenschaften.

In einer besonders vorteilhaften Ausgestaltung der Glaskeramik liegt das Verhältnis von (BaO + ZnO)/MgO, jeweils in Gewichtsprozent angegeben, im Bereich von 2,2 bis 35, bevorzugt im Bereich von 4,5 bis 15.

Vorzugsweise ist die Glaskeramik mit 0,1 bis 0,6 Gewichtsprozent Zinnoxid (SnO₂) geläutert. SnO₂-Gehalte von größer als 0,6 Gewichtsprozent beeinflussen die Schmelzbarkeit negativ und verstärken eine Entglasungsneigung. Durch den Einsatz von Zinnoxid kann auch auf den Einsatz gesundheitsschädlicher Läuterungsmittel verzichtet werden.

Eine besonders bevorzugte Glaskeramik enthält folgende Bestandteile in Gewichtsprozent:

| | | |
|---|---|---|
| SiO₂ | | 62 bis 68 |
| Al₂O₃ | | 18,5 bis 23 |
| Li₂O | | 3,0 bis 3,6, bevorzugt 3,2 bis 3,6 |
| MoO₃ | 0,003 | bis 0,25 |
| SnO₂ | | 0,1 bis 0,6 |
| BaO | | 1,2 bis 2,8 |
| MgO | | 0 bis kleiner 1, bevorzugt 0,3 bis kleiner 1 |
| ZnO | | 1,2 bis 2,5 |
| TiO₂ | | 2,6 bis 4,5 |
| ZrO₂ | | 0,9 bis 1,7 |
| B₂O₃ | | 0 bis 2 |
| P₂O₅ | | 0 bis 4 |
| Na₂O+K₂O | | 0 bis kleiner 1,5, bevorzugt bis kleiner 1 |
| CaO | | 0 bis kleiner 1 |
| SrO | | 0 bis kleiner 1 |
| Fe₂O₃ | | 0 bis 0,2, bevorzugt bis 0,15. |

In der bevorzugten Glaskeramik machen die aufgeführten Komponenten wenigstens 96 Gewichtsprozent, in der Regel mindestens 98 Gewichtsprozent der Gesamtzusammensetzung aus. Neben den genannten Komponenten können außerdem Verunreinigungen, wie sie in großtechnisch verwendeten Rohstoffen üblicherweise vorkommen, in der Glaskeramik enthalten sein.

Die Komponenten SiO₂ und Al₂O₃ bilden in der Glaskeramik zusammen mit dem Li₂O die Hauptbestandteile der Kristallphase Hochquarz-Mischkristall. Zugleich bestimmen sie wesentlich die Glasbildungseigenschaften sowie die Viskosität des Grünglases für die Herstellung der Glaskeramik. Der Gehalt an Al₂O₃ liegt bevorzugt im Bereich von 18,5 bis 23 Gewichtsprozent, wobei geringere Mengen zu einer unerwünschten Erhöhung der Viskosität führen. Ein höherer Al₂O₃-Anteil verstärkt die Entglasungsneigung und befördert die unerwünschte Bildung von Mullit.

Der optimale Bereich für SiO₂ liegt vorzugsweise zwischen 62 und 68 Gewichtsprozent. Glaskeramiken mit niedrigerem SiO₂-Gehalt können Nachteile in den für Kochflächen wichtigen Gebrauchseigenschaften, wie chemische Beständigkeit und thermische Belastbarkeit, zeigen. Bei Grüngläsern mit höherem SiO₂-Gehalt steigt dagegen die Schmelztemperatur an, so dass höhere Energiekosten bei der Herstellung der Glaskeramik entstehen können.

Als Keimbildner wirken vorzugsweise TiO₂, ZrO₂ und das zur Läuterung bevorzugt eingesetzte SnO₂. Um eine effektive Keimbildung auch bei kurzen Keramisierungszeiten zu gewährleisten, enthält die Glaskeramik vorteilhafterweise mindestens 2,6 Gewichtsprozent TiO₂ und mindestens 0,9 Gewichtsprozent ZrO₂. Die oberen Grenzen der Keimbildnergehalte ergeben sich aus den Anforderungen an Entglasungsstabilität und zur Vermeidung von unerwünschten Fremdphasen. Hohe Anteile an ZrO₂ führen zudem zu einer deutlichen Erhöhung der erforderlichen Schmelztemperaturen. Die Gesamtmenge an Keimbildnern sollte 6 Gewichtsprozent nicht übersteigen.

B₂O₃ und P₂O₅ können die Schmelzbarkeit des Glases verbessern, beeinflussen aber in größeren Mengen die thermische Ausdehnung und die thermische Belastbarkeit des Glases negativ. Besonders Phosphor kann zudem die Keramisierungsgeschwindigkeit verringern, so dass höhere Keramisierungszeiten benötigt werden.

Die Alkalimetalloxide Na₂O und K₂O werden bevorzugt in geringen Mengen, das heißt in Summe mit maximal 1,5 Gewichtsprozent, bevorzugt mit maximal 1 Gewichtsprozent, eingesetzt, um die Viskosität abzusenken. Ebenso kann der Einsatz von CaO und/oder SrO bis zu weniger als 1 Gewichtsprozent hilfreich sein. Größere Mengen dieser Oxide führen jedoch zur Bildung von Fremdphasen, die die thermische Ausdehnung unzulässig erhöhen.

Da mit MoO₃ eine ausreichende Farbwirkung erzielt werden kann, sollte, wie oben beschrieben, auf den Einsatz der Farboxide CoO, NiO, Cr₂O₃, CuO, Nd₂O₃ oder MnO₂ verzichtet werden.

Eine Ausnahme kann Fe₂O₃ bilden, das je nach Art der verwendeten Rohstoffe in Mengen von 0 bis zu 2 Gewichtsprozent, bevorzugt bis maximal 1,5 Gewichtsprozent, enthalten sein kann. Eine geringe Menge an Fe₂O₃ kann die Läuterung unterstützen und erlaubt den Einsatz kostengünstiger Rohstoffe. Es trägt also in Kombination mit den oben genannten Bestandteilen in den angeführten Grenzen sowohl zur Verbesserung der Schmelzbarkeit und der Qualität, als auch zur Kostensenkung bei.

Aus Gründen des Umwelt- und des Arbeitsschutzes wird auf den Einsatz von giftigen oder bedenklichen Rohstoffen nach Möglichkeit verzichtet. Daher ist die Glaskeramik vorzugsweise frei von umweltschädlichen Stoffen, die Arsen (As), Antimon (Sb), Cadmium (Cd), Blei (Pb), Caesium (Cs), Rubidium (Rb) Halogeniden und Schwefel (S), abgesehen von unvermeidbaren Verunreinigungen im Bereich von bevorzugt 0 bis kleiner 0,5 Gewichtsprozent, besonders bevorzugt kleiner 0,1 Gewichtsprozent, ganz besonders bevorzugt kleiner 0,05 Gewichtsprozent. Die Angaben in Gewichtsprozent beziehen sich dabei auf die Glaszusammensetzung auf Oxidbasis.

Allgemein können entweder natürlich vorkommende Rohstoffe oder chemisch aufbereitete beziehungsweise synthetisch hergestellte Rohstoffe zum Einsatz kommen. Natürlich vorkommende Rohstoffe sind in der Regel kostengünstiger als äquivalente chemisch aufbereitete oder synthetisierte Rohstoffe. Die Verwendbarkeit natürlicher Rohstoffe ist allerdings durch die üblicherweise hohen Mengen an Verunreinigungen beschränkt. Beispiele für natürlich vorkommende Rohstoffe sind Quarzsand, Spodumen und Petalit. Chemisch aufbereitete oder synthetisch hergestellte Rohstoffe enthalten in der Regel nur sehr wenige Verunreinigungen. Beispiele für gebräuchliche aufbereitete oder synthetisierte Rohstoffe sind Lithiumcarbonat oder Titandioxid-Pulver.

Je nach Bestandteil sollten bestimmte Grenzen solcher Verunreinigungen nicht überschritten werden. Neben den oben bereits erwähnten Bestandteilen, sollte insbesondere der Anteil von Cr₂O₃ in der Glaszusammensetzung auf weniger als 0,02 Gewichtsprozent, vorzugsweise weniger als 0,01 Gewichtsprozent, insbesondere weniger als 0,005 Gewichtsprozent beschränkt werden:

In einer bevorzugten Ausgestaltung ist mit der Angabe, dass die Glaskeramik Hochquarz-Mischkristall (HQMK) als Hauptkristallphase enthält, gemeint, dass der Anteil von Hochquarz-Mischkristall als Kristallphase mehr als 80%, bevorzugt mehr als 90%, der insgesamt vorhandenen Kristallphasen beträgt. Geringe Mengen, das heißt maximal 20% beziehungsweise bevorzugt maximal 10% und besonders bevorzugt maximal 5%, der Kristallphasen an Keatit-Mischkristall und an insbesondere Ti, Zr oder Sn-haltigen KeimbildnerPhasen können enthalten sein, wenn die Anforderungen an die thermische Ausdehnung erfüllt werden.

Die Bildung von anderen, insbesondere hoch-dehnenden Kristallphasen, wie Natrium- oder Kalium-Alumosilikaten oder -Silikaten wird dagegen bevorzugt vermieden.

Bei bevorzugten Glaskeramiken beträgt bei einer Dicke von 4 mm der nach DIN EN 410 gemessene Lichttransmissionsgrad (τvis) 0,5 bis 70 %, bevorzugt 0,5 bis 40 %, besonders bevorzugt 0,5 bis 30 %, ganz besonders bevorzugt 0,5 bis 20 %. Je nach Verwendung können auch die Bereiche 0,5 bis 5 % oder sogar 0,9 bis 2 % bevorzugt sein.

Dies stellt sicher, dass die technischen Bauelemente unter der Kochfläche vom Betrachter nicht als störend wahrgenommen werden.

Um eine gute Sichtbarkeit von Anzeigeelementen, wie farbigen LEDs unter der Kochfläche, zu erhalten, sind die Transmissionswerte im gesamten Wellenlängenbereich oberhalb von 450 nm größer als 0,1 %, bevorzugt größer als 0,15 %.

Der Transmissionsbereich von 0,5 bis 10% ist für die Verwendung von LED-basierten Anzeigen und Leuchtmitteln, beispielsweise 7-Segment-Anzeigen, besonders wichtig.

Der Transmissionsbereich von 10 bis 70%, bevorzugt von 30 bis 40%, ist für die Verwendung von TFT-Displays besonders vorteilhaft.

Diese Glaskeramiken sind also besonders gut für die Verwendung mit leuchtenden Anzeigeelementen und anderen Leuchtelementen geeignet. Beispiele hierfür sind LEDs, 7-Segment-Anzeigen, TFT-Displays, insbesondere LCD- und OLED-TFT-Displays oder Bild- oder Video-Projektoren zur Projektion durch die Glaskeramik hindurch. Solche Elemente können einfarbig oder mehrfarbig ausgeführt sein. Als einfarbige Elemente kommen insbesondere rote, grüne, blaue oder weiße Elemente in Betracht. Zu den mehrfarbigen Elementen zählen sowohl solche, die wenigstens zwei Grundfarben gleichzeitig anzeigen können, als auch solche, die wenigstens zwei Farben im Wechsel anzeigen können. Solche leuchtenden Elemente können auch in Kombination mit an der Glaskeramik angebrachten Streu- oder Diffusorelementen vorgesehen sein. Streu- und Diffusorelemente dienen dabei beispielsweise zur räumlichen Homogenisierung der Leuchtintensität oder einer Vergrößerung des Blickwinkels, unter dem das leuchtende Element wahrgenommen werden kann.

Die mittels V₂O₅ eingefärbten Ausführungsformen sind besonders für einfarbig rote Anzeige- und Leuchtelemente, insbesondere rote LEDs, rote 7-Segmentanzeigen und rote TFT-Displays geeignet. Die mittels MoO₃ eingefärbten Ausführungsformen sind insbesondere auch für weiße und mehrfarbige Anzeige- und Leuchtelemente, insbesondere weiße oder RGB-LEDs, weiße oder RGB-7-Segmentanzeigen und Farb-TFT-Displays oder Farb-Projektoren geeignet.

Im Infraroten ist die Transmission hoch genug, um ein gutes Ankochverhalten zu gewährleisten. Bevorzugt liegt die Transmission bei 45 bis 85 % bei 1600 nm.

In einer bevorzugten Ausführungsform erreicht die Schmelze des Grünglases der Glaskeramik eine Viskosität von 200 dPa s bei weniger als 1750°C, bevorzugt bei weniger als 1700°C.

Die thermische Ausdehnung im Bereich von 20°C bis 700°C liegt besonders bevorzugt im Bereich von 0 bis 0,41 ppm/K, bevorzugt von 0 - 0,35 ppm/K, besonders bevorzugt von 0 bis 0,3 ppm/K.

Verwendung findet die Glaskeramik bevorzugt als Kochfläche, Kaminsichtscheibe, Grill- oder Bratfläche, Abdeckung von Brennelementen in Gasgrills, Backofensichtscheibe, insbesondere für Pyrolyseherde, Arbeits- oder Tischplatte in Küchen oder Laboren, Abdeckung für Beleuchtungsvorrichtungen, in Brandschutzverglasungen und als Sicherheitsglas, optional im Laminatverbund, als Trägerplatte oder als Ofenauskleidung in thermischen Prozessen oder als rückseitige Abdeckung für mobile elektronische Geräte.

Die Glaskeramik kann insbesondere als Kochfläche mit Strahlungsheizkörper, Halogen-Heizkörper, Induktionsbeheizung oder mit Gas eingesetzt werden. Die Kochfläche kann dabei an der Oberseite und/oder der Unterseite ganz oder teilweise mit einem Dekor versehen sein. Ebenso können auf der Unterseite Berührungssensoren zur Bedienung der Kochfläche vorgesehen sein. Dies können beispielsweise aufgedruckte, aufgeklebte oder angedrückte kapazitive Sensoren sein.

Weiterhin kann die Kochfläche auch dreidimensional geformt sein, das heißt, die Platten können abgewinkelt oder gewölbt sein oder zum Beispiel einen als Wok ausgeformten Bereich enthalten. Auch Aussparungen, beispielsweise für den Betrieb von Gasbrennern, sind möglich.

Die Herstellung der Glaskeramik erfolgt bevorzugt in folgenden Schritten.

Zunächst werden neben den Gemengerohstoffen vorzugsweise auch Scherben geschmolzen. Bevorzugt erfolgt die Schmelze des Grünglases bei Temperaturen von 1500 bis 1700 °C.

Das Läutern der Schmelze des Grünglases erfolgt bevorzugt mit SnO₂.

Für die großtechnische Herstellung schließt sich ein Heißformgebungsverfahren an, bevorzugt Walzen oder Floaten, um Glaskeramik-Platten herzustellen. Die Formgebung erfolgt im Bereich der Verarbeitungstemperatur, vorzugsweise bei einer Viskosität von 10⁴ dPas. Diese Temperatur sollte vorzugsweise kleiner als 1350°C sein, besonders bevorzugt kleiner als 1330°C.

Um eine Kristallisation bei der Formgebung zu vermeiden, sollte der Abstand von der Verarbeitungstemperatur (V_{A}) zur oberen Entglasungstemperatur (V_{A} - OEG) bevorzugt zwischen 20 und 100 °C liegen.

Die Keramisierung der Glaskeramik-Platten erfolgt bevorzugt in einem zweistufigen Keramisierungsprozess, bei dem zunächst eine Keimbildung bei 680 bis 800°C erfolgt. Anschließend wird die Temperatur auf 850 bis 950°C erhöht, um die Hochquarz-Mischkristalle (HMQK) auf den Keimen aufwachsen zu lassen. Hierfür werden die Temperaturen so hoch gewählt, dass eine möglichst schnelle Keramisierung erfolgt, ohne dass jedoch bereits eine Umwandlung von Hochquarz-Mischkristall(HQMK) in Keatit-Mischkristall (KMK) stattfindet. Bei dem Übergang von Hochquarz-Mischkristall zu Keatit-Mischkristall nimmt die thermische Ausdehnung und, bedingt durch die Vergrößerung der Kristallitgrößen, die Streuung zu. Beide Effekte sollen in der vorliegenden Erfindung vermieden werden.

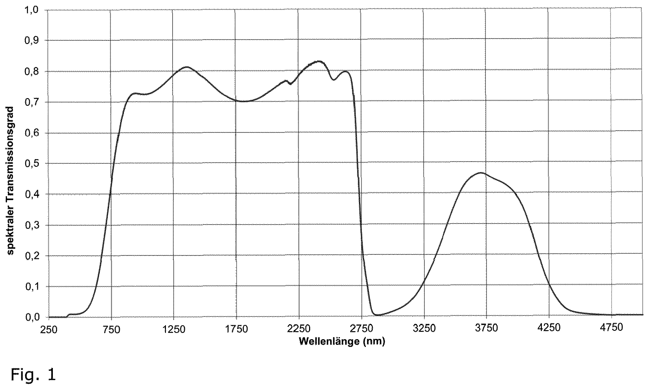

Im Folgenden werden Ausführungsbeispiele und unter Bezugnahme auf die Tabellen 1 bis 5 (jeweils mit a und b) und anhand der Figur 1 näher erläutert.

Die Tabellen 1 bis 5 zeigen Zusammensetzungen nach Analyse in Gewichtsprozent und Eigenschaften, insbesondere von Glaskeramiken und dazugehörigen Grüngläsern als Beispiele 1 bis 19 in den Tabellen 1 bis 3 (jeweils mit a und b), erfindungsgemäße Beispiele 20 bis 27 in den Tabellen 3a und 3b sowie 4a und 4b sowie nicht-erfindungsgemäße Vergleichsbeispiele V1 bis V5 in den Tabellen 5a und 5b.

**Tabelle 1a: Beispiele 1 bis 8**

| Beispiel | 1 | 2 | 3 | 4 | 5 | 6 | 7 | 8 |
|---|---|---|---|---|---|---|---|---|
| Li₂O | 3,35 | 3,20 | 3,32 | 3,22 | 3,27 | 3,25 | 3,3 | 3,31 |
| Na₂O | 0,44 | 0,270 | 0,33 | 0,20 | 0,21 | 0,28 | 0,29 | 0,29 |
| K₂O | 0,44 | 0,64 | 0,32 | 0,66 | 0,23 | 0,31 | 0,35 | 0,35 |
| MgO | 0,66 | 0,31 | 0,50 | 0,31 | 0,77 | 0,52 | 0,59 | 0,59 |
| CaO | 0,47 | 0,41 | 0,21 | 0,34 | 0,30 | 0,71 | 0,61 | 0,61 |
| SrO | | | | | | | | 0,018 |
| BaO | 1,74 | 2,39 | 2,04 | 2,31 | 2,45 | 2,35 | 2,35 | 2,35 |
| ZnO | 1,39 | 1,96 | 1,94 | 1,92 | 1,82 | 1,97 | 2,06 | 2,15 |
| Al₂O₃ | 19,80 | 18,50 | 19,20 | 18,50 | 18,40 | 18,60 | 18,70 | 18,60 |
| SiO₂ | 66,50 | 67,60 | 67,50 | 67,30 | 67,30 | 66,90 | 66,70 | 66,70 |
| TiO₂ | 3,25 | 3,15 | 3,15 | 3,16 | 3,38 | 3,32 | 3,33 | 3,15 |
| ZrO₂ | 1,24 | 1,16 | 1,01 | 1,24 | 1,43 | 1,42 | 1,36 | 1,45 |
| P₂O₅ | 0,028 | 0,028 | 0,028 | 0,028 | 0,028 | 0,028 | 0,03 | 0,028 |
| SnO₂ | 0,250 | 0,240 | 0,240 | 0,250 | 0,250 | 0,250 | 0,250 | 0,250 |
| Fe₂O₃ | 0,140 | 0,180 | 0,200 | 0,200 | 0,085 | 0,100 | 0,100 | 0,100 |
| V₂O₅ | 0,030 | 0,029 | 0,028 | 0,030 | 0,029 | 0,029 | 0,029 | 0,028 |
| B₂O₃ | 0,230 | | | 0,300 | | | | |
| Eigenschaften, glasig | | | | | | | | |
| V_{A} (°C) | 1316 | 1341 | 1332 | 1334 | 1322 | 1322 | 1316 | 1320 |
| T2,30 (200 dPas) | 1666 | 1699 | 1685 | 1692 | 1678 | 1675 | 1669 | 1679 |
| OEG (°C) | 1226 | 1245 | 1235 | 1235 | 1260 | 1275 | 1280 | n.b. |
| V_{A} - OEG (°C) | 90 | 96 | 97 | 99 | 62 | 47 | 36 | n.b. |

**Tabelle 1b: Beispiele 1 bis 8**

| Beispiel | 1 | 2 | 3 | 4 | 5 | 6 | 7 | 8 |
|---|---|---|---|---|---|---|---|---|
| Eigenschaften, keramisiert | | | | | | | | |
| HQMK Anteil % | 98,0 | 98,1 | 94,7 | 97,9 | 97,9 | 95,3 | 90,8 | 89,8 |
| HQMK Kristallitgröße (nm) | 42 | 38 | 40 | n.b. | n.b. | 45 | 47 | 47 |
| KMK Anteil % | 1,808 | 0,000 | 3,684 | 0,000 | 0,000 | 3,731 | 8,079 | 8,736 |
| KMK Kristallitgröße (nm) | n.b. | n.b. | n.b. | nb. | n.b. | n.b. | 33 | n.b. |
| ZrTiO₄ Anteil % | 0,181 | 0,780 | 0,526 | 0,922 | 0,912 | 0,560 | 0,718 | 1,115 |
| Rutil (TiO₂) Anteil % | 0,0 | 1,2 | 1,1 | 1,2 | 1,2 | 0,4 | 0,4 | 0,4 |
| τᵥᵢₛ (%) | 2,2 | 2,4 | 3,3 | 3,0 | 0,7 | 1,1 | 0,7 | 1,0 |
| T(470nm) (%) | 0,7 | 0,8 | 1,0 | 0,9 | 0,2 | 0,4 | 0,2 | 0,3 |
| T(630nm) (%) | 6,4 | 6,8 | 9,0 | 8,1 | 2,5 | 3,5 | 2,5 | 3,1 |
| T(950nm) (%) | 69,6 | 65,3 | 65,2 | 65,0 | 69,6 | 69,2 | 67,2 | 67,6 |
| T(1600nm) (%) | 73,3 | 70,4 | 67,6 | 67,9 | 80,4 | 78,7 | 78,8 | 78,7 |
| Dichte (g/ccm) | n.b. | n.b. | n.b. | nb. | n.b. | 2,57 | 2,57 | 2,57 |
| α (20,700°C), ppm/K | 0,4 | 0,16 | 0,07 | 0,1 | 0,17 | 0,21 | 0,28 | n.b. |

**Tabelle 2a: Beispiele 9 bis16**

| Beispiel | 9 | 10 | 11 | 12 | 13 | 14 | 15 | 16 |
|---|---|---|---|---|---|---|---|---|
| Li₂O | 3,22 | 3,28 | 3,27 | 3,36 | 3,30 | 3,46 | 3,31 | 3,30 |
| Na₂O | 0,35 | 0,32 | 0,31 | 0,36 | 0,35 | 0,42 | 0,33 | 0,42 |
| K₂O | 0,55 | 0,3 | 0,4 | 0,35 | 0,57 | 0,53 | 0,5 | 0,39 |
| MgO | 0,42 | 0,56 | 0,65 | 0,56 | 0,49 | 0,37 | 0,37 | 0,44 |
| CaO | 0,32 | 0,55 | 0,27 | 0,58 | 0,75 | 0,76 | 0,55 | 0,51 |
| SrO | 0,015 | 0,012 | 0,012 | 0,012 | 0,016 | 0,014 | 0,024 | 0,14 |
| BaO | 2,03 | 1,6 | 1,61 | 1,62 | 1,71 | 1,81 | 1,85 | 1,79 |
| ZnO | 1,71 | 1,83 | 2,01 | 1,99 | 2 | 2,01 | 1,92 | 1,95 |
| Al₂O₃ | 20,9 | 20,9 | 20,9 | 21,4 | 21,2 | 21,4 | 21,6 | 21,6 |
| SiO₂ | 65,4 | 65,6 | 65,5 | 64,8 | 64,6 | 64,2 | 64,4 | 64,5 |
| TiO₂ | 3,29 | 3,35 | 3,35 | 3,21 | 3,29 | 3,3 | 3,27 | 3,23 |
| ZrO₂ | 1,43 | 1,33 | 1,33 | 1,34 | 1,38 | 1,31 | 1,41 | 1,4 |
| P₂O₅ | 0,029 | 0,029 | 0,029 | 0,029 | 0,032 | 0,031 | 0,03 | 0,03 |
| SnO₂ | 0,25 | 0,25 | 0,25 | 0,27 | 0,25 | 0,25 | 0,25 | 0,25 |
| Fe₂O₃ | 0,1 | 0,1 | 0,1 | 0,099 | 0,099 | 0,1 | 0,099 | 0,1 |
| V₂O₅ | 0,03 | 0,028 | 0,03 | 0,028 | 0,028 | 0,027 | 0,026 | 0,027 |
| B₂O₃ | 0 | 0 | 0 | 0 | 0 | 0 | 0 | 0 |
| Eigenschaften, glasig | | | | | | | | |
| V_{A} (°C) | 1318 | 1308 | 1310 | 1290 | 1299 | 1281 | 1301 | 1298 |
| T2,30 (200 dPas) | 1665 | 1650 | 1651 | 1639 | 1638 | 1637 | 1650 | 1646 |
| OEG (°C) | 1290 | 1275 | 1265 | 1270 | 1230 | 1260 | 1325 | 1270 |
| V_{A} - OEG (°C) | 28 | 33 | 45 | 20 | 69 | 21 | -24 | 28 |

**Tabelle 2b: Beispiele 9 bis16**

| Beispiel | 9 | 10 | 11 | 12 | 13 | 14 | 15 | 16 |
|---|---|---|---|---|---|---|---|---|
| Eigenschaften, keramisiert | | | | | | | | |
| HQMK Anteil % | 99,2 | 99,3 | 99,3 | 98,9 | 99,0 | 99,1 | 98,9 | 98,9 |
| HQMK Kristallitgröße (nm) | 37 | 38 | 36 | 42 | 42 | 42 | 40 | 40 |
| KMK Anteil % | 0,000 | 0,000 | 0,000 | 0,000 | 0,000 | 0,000 | 0,000 | 0,000 |
| KMK Kristallitgröße (nm) | n.b. | n.b. | n.b. | n.b. | n.b. | n.b. | n.b. | n.b. |
| ZrTiO₄ Anteil % | 0,787 | 0,717 | 0,714 | 1,116 | 0,987 | 0,865 | 1,141 | 1,101 |
| Rutil (TiO₂) Anteil % | 0,0 | 0,0 | 0,0 | 0,0 | 0,0 | 0,0 | 0,0 | 0,0 |
| τᵥᵢₛ (%) | n.b. | n.b. | n.b. | 3,7 | 2,7 | 2,4 | n.b. | n.b. |
| (%) T(470nm) | n.b. | n.b. | n.b. | 1,0 | 0,7 | 0,6 | n.b. | n.b. |
| (%) T(630nm) | n.b. | n.b. | n.b. | 10,5 | 7,8 | 7,2 | n.b. | n.b. |
| (%) T(950nm) | n.b. | n.b. | n.b. | 72,7 | 71,1 | 70,8 | n.b. | n.b. |
| T(1600n m) (%) | n.b. | n.b. | n.b. | 74,0 | 74,4 | 74,6 | n.b. | n.b. |
| Dichte (g/ccm) | 2,55 | 2,56 | 2,56 | 2,56 | 2,55 | 2,55 | 2,56 | 2,56 |
| α (20,700°C), ppm/K | 0,32 | 0,24 | 0,2 | 0,26 | 0,41 | 0,35 | 0,3 | 0,29 |

**Tabelle 3a: Beispiele 17 bis 21**

| Beispiel | 17 | 18 | 19 | 20 | 21 |
|---|---|---|---|---|---|
| Li₂O | 3,29 | 3,27 | 3,29 | 3,31 | 3,30 |
| Na₂O | 0,36 | 0,36 | 0,36 | 0,37 | 0,36 |
| K₂O | 0,36 | 0,36 | 0,35 | 0,36 | 0,36 |
| MgO | 0,55 | 0,56 | 0,56 | 0,56 | 0,56 |
| CaO | 0,59 | 0,58 | 0,59 | 0,58 | 0,58 |
| SrO | 0,012 | 0,012 | 0,013 | 0,013 | 0,012 |
| BaO | 1,62 | 1,62 | 1,63 | 1,62 | 1,63 |
| ZnO | 2,01 | 2,00 | 1,99 | 1,92 | 1,90 |
| Al₂O₃ | 21,4 | 21,4 | 21,5 | 21,4 | 21,4 |
| SiO₂ | 64,9 | 64,8 | 64,8 | 64,8 | 64,7 |
| TiO₂ | 3,23 | 3,22 | 3,16 | 3,2 | 4,02 |
| ZrO₂ | 1,34 | 1,33 | 1,34 | 1,35 | 0,68 |
| P₂O₅ | 0,029 | 0,029 | 0,022 | 0,035 | 0,03 |
| SnO₂ | 0,12 | 0,4 | 0,25 | 0,24 | 0,22 |
| Fe₂O₃ | 0,1 | 0,1 | 0,097 | 0,099 | 0,100 |
| V₂O₅ | 0,026 | 0,025 | 0,033 | 0 | 0 |
| MoO₃ | 0 | 0 | 0 | 0,16 | 0,149 |
| Eigenschaften, glasig | | | | | |
| V_{A} (°C) | 1301 | 1299 | 1300 | 1300 | n.b. |
| T2,30 (200 dPas) | 1595 | 1593 | 1591 | 1645 | n.b. |
| OEG (°C) | 1230 | 1250 | 1265 | 1275 | n.b. |
| V_{A} - OEG (°C) | 71 | 49 | 35 | 25 | n.b. |

**Tabelle 3b: Beispiele 17 bis 21**

| Beispiel | 17 | 18 | 19 | 20 | 21 |
|---|---|---|---|---|---|
| Eigenschaften, keramisiert | | | | | |
| HQMK Anteil % | n.b. | n.b. | n.b. | n.b. | n.b. |
| HQMK Kristallitgröße (nm) | n.b. | n.b. | n.b. | n.b. | n.b. |
| KMK Anteil % | n.b. | n.b. | n.b. | n.b. | n.b. |
| KMK Kristallitgröße (nm) | n.b. | n.b. | n.b. | n.b. | n.b. |
| ZrTi04 Anteil % | n.b. | n.b. | n.b. | n.b. | n.b. |
| Rutil (TiO2) Anteil % | n.b. | n.b. | n.b. | n.b. | n.b. |
| τᵥᵢₛ (%) | 19,0 | 1,8 | 1,8 | 5,0 | 0,6 |
| T(470nm) (%) | 8,4 | 0,3 | 0,3 | 5,2 | 0,6 |
| T(630nm) (%) | 34,6 | 6,1 | 6,1 | 7,0 | 0,96 |
| T(950nm) (%) | 77,1 | 71,3 | 70,7 | 50,9 | 28,2 |
| T(1600nm) (%) | 74,9 | 73,9 | 74,4 | 68,1 | 66,13 |
| Dichte (g/ccm) | 2,56 | 2,56 | 2,56 | 2,56 | n.b. |
| α (20,700°C), ppm/K | 0,26 | 0,28 | 0,3 | 0,29 | n.b. |

**Tabelle 4a: Beispiele 22 bis 27**

| Beispiel | 22 | 23 | 24 | 25 | 26 | 27 |
|---|---|---|---|---|---|---|
| Li₂O | 3,22 | 3,25 | 3,38 | 3,56 | 3,27 | 3,58 |
| Na₂O | 0,78 | 0,76 | 0,20 | 0,76 | 0,38 | 0,48 |
| K₂O | 0,20 | 0,58 | 0,20 | 0,58 | 0,39 | 0,40 |
| MgO | 0,81 | 0,20 | 0,76 | 0,19 | 0,38 | 0,48 |
| CaO | 0,21 | 0,72 | 0,72 | 0,71 | 0,21 | 0,46 |
| SrO | 0 | 0 | 0 | 0 | 0 | 0 |
| BaO | 2,42 | 0,49 | 2,43 | 0,490 | 0,49 | 1,42 |
| ZnO | 1,16 | 0,90 | 1,25 | 1,26 | 1,96 | 1,40 |
| Al₂O₃ | 19,8 | 22,9 | 22,4 | 22,6 | 22,4 | 21,1 |
| SiO₂ | 66,9 | 65,6 | 63,8 | 64,8 | 65,9 | 65,6 |
| TiO₂ | 2,68 | 3,45 | 2,69 | 4,08 | 3,15 | 3,57 |
| ZrO₂ | 1,44 | 0,65 | 1,55 | 0,43 | 1,14 | 1,05 |
| P₂O₅ | 0 | 0 | 0 | 0 | 0 | 0 |
| SnO₂ | 0,20 | 0,19 | 0,38 | 0,39 | 0,19 | 0,29 |
| Fe₂O₃ | 0,11 | 0,15 | 0,03 | 0,031 | 0,064 | 0,095 |
| V₂O₅ | 0 | 0 | 0 | 0 | 0 | 0 |
| MoO₃ | 0,043 | 0,15 | 0,084 | 0,083 | 0,058 | 0,080 |
| Eigenschaften, glasig | | | | | | |
| V_{A} (°C) | 1331 | n.b. | 1295 | 1299 | 1313 | 1305 |
| T2,30 (200 dPas) | n.b. | n.b. | n.b. | n.b. | n.b. | n.b. |
| OEG (°C) | 1260 | n.b. | 1310 | 1305 | n.b. | 1230 |
| V_{A} - OEG (°C) | 71 | n.b. | -15 | -6 | n.b. | 75 |

**Tabelle 4b: Beispiele 21 bis 27**

| Beispiel | 22 | 23 | 24 | 25 | 26 | 27 |
|---|---|---|---|---|---|---|
| Eigenschaften, keramisiert | | | | | | |
| HQMK Anteil % | n.b. | n.b. | n.b. | n.b. | n.b. | n.b. |
| HQMK Kristallitgröße (nm) | 43 | 73 | 53 | 60 | 70 | 42 |
| KMK Anteil % | n.b. | n.b. | n.b. | n.b. | n.b. | n.b. |
| KMK Kristallitgröße (nm) | n.b. | n.b. | n.b. | n.b. | n.b. | n.b. |
| ZrTiO4 Anteil % | 1,1 | n.b | 0,9 | n.b. | 0,7 | n.b. |
| Rutil (TiO2) Anteil % | n.b. | n.b. | n.b. | n.b. | n.b. | 0,6 |
| τᵥᵢₛ (%) | 38,5 | 1,4 | 28,2 | 4,3 | 10,8 | 0,9 |
| T(470nm) (%) | 33,2 | 0,6 | 23,7 | 2,4 | 5,2 | 1,6 |
| T(630nm) (%) | 46,1 | 3,4 | 35,7 | 6,7 | 17,6 | 0,9 |
| T(950nm) (%) | 71,6 | 17,2 | 75,4 | 42,5 | 61,8 | 26,0 |
| T(1600nm) (%) | 72,3 | 25,4 | 84,2 | 78,3 | 76,7 | 65,9 |
| Dichte (g/ccm) | 2,54 | 2,49 | 2,56 | 2,50 | 2,52 | 2,54 |
| α (20,700°C), ppm/K | 0,59 | 0,44 | 0,44 | 0,42 | -0,23 | 0,26 |

**Tabelle 5a: Vergleichsbeispiele V1 bis V5**

| Vergleichs-Beispiel | V1 | V2 | V3 | V4 | V5 |
|---|---|---|---|---|---|
| Li₂O | 3,63 | 2,92 | 3,80 | 2,93 | 3,50 |
| Na₂O | 0,20 | 0,68 | 0,20 | 0,18 | 0,39 |
| K₂O | 0,20 | 0,20 | 0,67 | 0,20 | 0,39 |
| MgO | 1,09 | 1,11 | 0,19 | 1,11 | 1,11 |
| CaO | 0,42 | 0,52 | 0,41 | 0,21 | 0,21 |
| SrO | 0 | 0 | 0 | 0 | 0 |
| BaO | 0,98 | 2,43 | 0,97 | 2,43 | 2,42 |
| ZnO | 1,84 | 1,82 | 1,61 | 1,83 | 1,25 |
| Al₂O₃ | 18,30 | 18,30 | 21,40 | 21,00 | 20,80 |
| SiO₂ | 68,40 | 66,50 | 65,40 | 65,00 | 64,40 |
| TiO₂ | 3,56 | 2,97 | 3,35 | 3,06 | 3,56 |
| ZrO₂ | 0,93 | 1,53 | 1,03 | 1,28 | 0,94 |
| P₂O₅ | 0,03 | 0,028 | 0,029 | 0,027 | 0,029 |
| SnO₂ | 0,240 | 0,250 | 0,250 | 0,250 | 0,250 |
| Fe₂O₃ | 0,200 | 0,200 | 0,200 | 0,079 | 0,200 |
| V₂O₅ | 0,029 | 0,030 | 0,028 | 0,028 | 0,030 |
| B₂O₃ | 0,000 | 0,450 | 0,440 | 0,440 | 0,460 |
| Eigenschaften, glasig | | | | | |
| V_{A} (°C) | 1307 | 1308 | 1297 | 1300 | 1281 |
| T2,30 (200 dPas) | 1666 | 1660 | 1638 | 1638 | 1621 |
| OEG (°C) | n.b. | n.b. | n.b. | n.b. | n.b. |
| V_{A} - OEG (°C) | n.b. | n.b. | n.b. | n.b. | n.b. |

**Tabelle 5b: Vergleichsbeispiele V1 bis V5**

| Vergleic hs-Beispiel | V1 | V2 | V3 | V4 | V5 |
|---|---|---|---|---|---|
| Eigenschaften, keramisiert | | | | | |
| HQMK Anteil % | 0,0 | 9,6 | 98,5 | 99,1 | 97,1 |
| HQMK Kristallitgröße (nm) | n.b. | 34 | 93 | 48 | 40 |
| KMK Anteil % | 97,709 | 88,554 | 1,303 | 0,000 | 2,004 |
| KMK Kristallitgröße (nm) | 74 | 74 | n.b. | n.b. | n.b. |
| ZrTiO₄ Anteil % | 0,687 | 1,506 | 0,163 | 0,887 | 0,911 |
| Rutil (TiO₂) Anteil % | 1,6 | 0,3 | 0,0 | 0,0 | 0,0 |
| τᵥᵢₛ (%) | 0,1 | 1,1 | 8,4 | 4,6 | 1,6 |
| T(470nm) (%) | 0,0 | 0,3 | 3,3 | 1,6 | 0,4 |
| T(630nm) (%) | 0,3 | 3,5 | 18,3 | 11,9 | 4,8 |
| T(950nm) (%) | 44,1 | 56,6 | 69,7 | 77,5 | 61,7 |
| T(1600n m) (%) | 67,9 | 67,7 | 67,7 | 80,2 | 67,4 |
| Dichte (g/ccm) | n.b. | n.b. | n.b. | n.b. | n.b. |
| α (20,700°C), ppm/K | 0,93 | 1,51 | -0,15 | 0,61 | 0,91 |

Die in den Tabellen 1 bis 5 gezeigten Bestandteile der Ausgangsgläser, dargestellt ist die Zusammensetzung in Gewichtsprozent nach Analyse, wurden bei 1600 bis 1650°C für 4 Stunden in Tiegeln aus gesintertem Kieselglas geschmolzen. Anschließend wurden sie bei 1550 bis 1580°C in Kieselglastiegel umgegossen und 30 Minuten lang durch Rühren homogenisiert. Die Läuterung mit Zinnoxid erfolgte bei 1620 bis 1640°C für 2 Stunden.

Die Gläser wurden zu Gussstücken gegossen, die in einem Kühlofen von einer Temperatur circa 20°C unterhalb der Transformationstemperatur (T_{g}) langsam auf Raumtemperatur abgekühlt wurde.

Ein Teil der Gussstücke wurde für die Bestimmung der glasigen Eigenschaften verwendet. Es wurden die Verarbeitungstemperatur (Vₐ) bei einer Viskosität von 10⁴ dPas und die Temperatur, die einer Viskosität von 200 dPas entspricht, bestimmt. In einigen Fällen wurde die obere Entglasungstemperatur (OEG) nach 5 Stunden in Pt-Kontakt bestimmt.

Die in den Tabellen verwendete Abkürzung n.b. bedeutet, dass diese Daten nicht bestimmt wurden.

Außerdem wurden aus den Gussstücken Proben für die Messungen der Glaskeramikeigenschaften hergestellt und keramisiert.

Als Keramisierungsprogramm wurde folgendes Temperatur-Zeit-Profil verwendet:
a) schnelles Aufheizen von Raumtemperatur auf 740 °C in 26 Minuten,
b) Temperaturerhöhung von 740 bis 825 °C in 18 Minuten (Heizrate 4,7 °C/min),
c) Temperaturerhöhung von 825 °C bis 930 °C in 4 Minuten (Heizrate 26 °C/min), Haltezeit von 4 Minuten bei der Maximaltemperatur 930°C,
d) Abkühlen auf 800°C innerhalb 16 Minuten, dann schnelle Abkühlung auf Raumtemperatur.

An den keramisierten Proben wurde eine XRD-Messung zur Bestimmung der Kristallphasen und Kristallitgrößen mit Hilfe der Rietveld-Analyse durchgeführt.

Da die Bestimmung der amorphen Phase mit großen Unsicherheiten behaftet ist, sind die in den Tabellen angegebenen Kristallphasenanteile auf den gesamten Kristallphasengehalt der Glaskeramik bezogen.

Die Transmission wurde an Proben mit einer Dicke von 3 bis 4 mm bestimmt und zur besseren Vergleichbarkeit auf eine Dicke von 4 mm umgerechnet. Der Lichttransmissionsgrad (τᵥᵢₛ), gemessen nach DIN EN 410, ist in den Tabellen aufgeführt.

Die thermische Ausdehnung (α) wurde im Bereich von 20°C bis 700°C gemessen.

An einigen Proben wurde außerdem die Dichte im keramisierten Zustand bestimmt.

Es sind die Beispiele 1 bis 19 mit V₂O₅, dargestellt in den Tabellen 1a und 1b, in den Tabellen 2a und 2b sowie erfindungsgemäße Beispiele 20 bis 27 mit MoO₃ in den Tabellen 3a und 3b und 4a und 4b für erfindungsgemäße Glaskeramiken und die Beispiele V1 bis V5 sind nicht-erfindungsgemäße Vergleichsbeispiele, dargestellt in den Tabellen 5a und 5b.

Die nicht-erfindungsgemäßen und die erfindungsgemäßen Glaskeramiken aus den Beispielen 1 bis 27 haben Verarbeitungstemperaturen (V_{A}) zwischen 1281°C und 1341°C. Die obere Entglasungstemperatur (OEG) liegt zwischen 1226°C und 1325°C.

Durch eine geeignete Auswahl der Zusammensetzung ist es möglich, besonders entglasungsstabile Schmelzen des Grünglases zu erhalten, das heißt Schmelzen, die einen besonders großen Abstand von der Verarbeitungstemperatur zur oberen Entglasungstemperatur (V_{A} - OEG) aufweisen. Dies kann je nach Anforderungen der gewählten Heißformgebung notwendig sein.

Die Temperaturen, bei der die Schmelzen des Grünglases eine Viskosität von 200 dPas aufweisen, liegen bei den erfindungsgemäßen Beispielen zwischen 1591°C und 1699°C.

Alle Schmelzen des Grünglases bei den erfindungsgemäßen Beispielen haben nach der oben beschriebenen Keramisierung Hochquarz (HQMK) als Hauptkristallphase mit in der Regel mehr als 90% des Gesamtkristallphasenanteils. Weitere Kristallphasen sind Keatit-Mischkristall (KMK) und die Keimbildnerphasen ZrTiO₄ und Rutil (TiO₂). Zugleich sind die Kristallitgrößen mit 33 nm bis 73 nm so klein, dass bei der Verwendung von Anzeigeelementen unterhalb der Glaskeramik keine störende Streuung auftritt.

Der Lichttransmissionsgrad (τᵥᵢₛ), umgerechnet auf 4 mm Dicke, liegt bei den Ausführungsbeispielen bei 0,6 bis 38,5 %.

Figur 1 zeigt das Transmissionsspektrum der Probe aus Beispiel 12.

Die Probe von Beispiel 12 zeigt im Infraroten (1600 nm) eine Transmission von 74%. Die Transmission der Glaskeramik bei 470 nm beträgt 1,0 % und ist bei allen Wellenlängen darüber größer als dieser Wert, so dass eine gute Anzeigefähigkeit für farbige LEDs gegeben ist.

Bei der Glaskeramik nach Beispiel 12 beträgt der Lichttransmissionsgrad (τᵥᵢₛ) 3,7 %.

Beispiel 17 zeigt eine höhere Transmission im Sichtbaren von fast 20 % (Tabelle 3b). Dies kann vorteilhaft sein, wenn eine Unterseitenbeschichtung verwendet werden soll oder unterhalb der Glaskeramik Displayelemente angebracht werden sollen.

Beispiel 19 wurde mit günstigeren technischen Rohstoffen geschmolzen. Dadurch wurden Verunreinigungen von 0,0041 Gewichtsprozent Cr₂O₃ und durch den Tiegelkontakt 0,00032 Gewichtsprozent Rh eingebracht. Wie an den in Tabellen 3a und 3b aufgeführten Eigenschaften ersichtlich ist, werden trotzdem die gewünschten Gebrauchseigenschaften für Glaskeramikkochflächen erreicht.

Das erfindungsgemäße Beispiel 20 verdeutlicht die Färbung mit MoO₃. Die Zusammensetzung enthält 0,16 % MoO₃ (Tabelle 3a) und hat im keramisierten Zustand einen Lichttransmissionsgrad (τᵥᵢₛ) von 5 % (Tabelle 3b).

In den Tabellen 4a und 4b sind weitere erfindungsgemäße Beispiele für Färbung durch MoO₃ aufgeführt. Die Lichttransmissionsgrade (τᵥᵢₛ) der mittels MoO₃ gefärbten Beispiele liegen ebenfalls im Bereich von 0,6 % bis 38,5 %. Höhere und niedrigere Lichttransmissionsgrade können durch entsprechende Anpassung der Zusammensetzung ebenfalls eingestellt werden.

Die thermische Ausdehnung (α) der Glaskeramiken gemäß den Ausführungsbeispielen liegt bei 0,07 bis 0,59 ppm/K im Bereich von 20 bis 700°C (Tabellen 1b, 2b und 3b), entspricht also den Anforderungen für temperaturstabile Kochflächen.

Die nicht erfindungsgemäßen Vergleichsbeispiele V1 bis V5 in der Tabelle 5a verdeutlichen die Auswahl der Zusammensetzungsbereiche.

Die Vergleichsbeispiele V1 und V2 enthalten zu hohe Anteile an MgO (Tabelle 5a). Beide zeigen Keatit-Mischkristall (KMK) als Hauptkristallphase und entsprechend hohe thermische Ausdehnungen (α), wie in Tabelle 5b gezeigt. Dies ist auch bedingt durch den zu hohen SiO₂-Gehalt im Vergleichsbeispiel V1 und den zu niedrigen Li₂O Gehalt in V2 (Tabelle 5a).

Vergleichsbeispiel V3 hat einen Lithiumgehalt von 3,8 % (Tabelle 5a). Obwohl die Glaskeramik gute Eigenschaften aufweist, hat sie, bedingt durch den hohen Lithiumgehalt, höhere Rohstoffkosten und daher keinen Vorteil gegenüber dem bekannten Stand der Technik.

Vergleichsbeispiel V4 hat im Vergleich zu den erfindungsgemäßen Glaskeramiken mit 1,11 Gewichtsprozent auch einen zu hohen MgO-Gehalt und einen zu niedrigen Li₂O Gehalt, wie in Tabelle 5a ersichtlich, so dass die thermische Ausdehnung zwischen 20°C und 700°C auf 0,6 ppm/K ansteigt (Tabelle 5a).

Vergleichsbeispiel V5 zeigt die negative Auswirkung eines zu hohen MgO-Gehalts (Tabelle 5a) auf die thermische Ausdehnung, die im Beispiel V5 auf 0,91 ppm/K ansteigt (Tabelle 5b).

## Patentansprüche

1. Transparente, gefärbte Glaskeramik, insbesondere eine LAS-Glaskeramik, mit Hochquarz-Mischkristall (HQMK) als Hauptkristallphase und einer thermischen Ausdehnung im Bereich von 20°C bis 700°C von -1 bis +1 ppm/K, wobei die Glaskeramik als Bestandteile 3,0 bis 3,6 Gewichtsprozent Lithiumoxid (Li₂O) enthält und mit 0,003 bis 0,25 Gewichtsprozent Molybdänoxid (MoO₃) eingefärbt ist.

2. Glaskeramik nach Anspruch 1, welche die Farboxide CoO, NiO, Cr₂O₃, CuO oder Nd₂O₃ jeweils in Mengen von 0 bis kleiner 0,01 Gewichtsprozent und MnO₂ in einer Menge von 0 bis kleiner 0,03 Gewichtsprozent enthält.

3. Glaskeramik nach den Ansprüchen 1 oder 2, welche folgende Bestandteile an Erdalkali-Oxiden und ZnO in Gewichtsprozent enthält:
| | |
|---|---|
| BaO | 1,2 bis 2,8 |
| MgO | 0 bis kleiner 1 |
| CaO | 0 bis kleiner 1 |
| ZnO | 1,2 bis 2,5. |

4. Glaskeramik nach einem oder mehreren der vorherigen Ansprüche, welche mit 0,1 bis 0,6 Gewichtsprozent Zinnoxid (SnO₂) geläutert ist.

5. Glaskeramik nach einem oder mehreren der vorherigen Ansprüche, welche folgende Bestandteile in Gewichtsprozent enthält:
| | |
|---|---|
| SiO₂ | 62 bis 68 |
| Al₂O₃ | 18,5 bis 23 |
| Li₂O | 3,0 bis 3,6, bevorzugt 3,2 bis 3,6 |
| MoO₃ | 0,003 bis 0,25 |
| SnO₂ | 0,1 bis 0,6 |
| BaO | 1,2 bis 2,8 |
| MgO | 0 bis kleiner 1, bevorzugt 0,3 bis kleiner 1 |
| ZnO | 1,2 bis 2,5 |
| TiO₂ | 2,6 bis 4,5 |
| ZrO₂ | 0,9 bis 1,7 |
| B₂O₃ | 0 bis 2 |
| P₂O₅ | 0 bis 4 |
| Na₂O+K₂O | 0 bis kleiner 1,5, bevorzugt bis kleiner 1 |
| CaO | 0 bis kleiner 1 |
| SrO | 0 bis kleiner 1 |
| Fe₂O₃ | 0 bis 0,2, bevorzugt bis 0,15. |

6. Glaskeramik nach einem oder mehreren der vorherigen Ansprüche, wobei das Verhältnis von (BaO + ZnO)/MgO, jeweils in Gewichtsprozent angegeben, im Bereich von 2,2 bis 35 liegt, bevorzugt im Bereich von 4,5 bis 15.

7. Glaskeramik nach einem oder mehreren der vorherigen Ansprüche, welche Verbindungen mit Arsen (As), Antimon (Sb), Cadmium (Cd), Blei (Pb), Halogeniden oder Schwefel (S) in einer Menge von 0 bis kleiner 0,5 Gewichtsprozent enthält, bevorzugt kleiner 0,1 Gewichtsprozent, besonders bevorzugt kleiner 0,05 Gewichtsprozent.

8. Glaskeramik nach einem oder mehreren der vorherigen Ansprüche, welche Hochquarz-Mischkristall (HQMK) als Hauptkristallphase aufweist mit mehr als 80 % der vorhandenen Kristallphasen, bevorzugt mit mehr als 90 % und als weitere Kristallphasen nur Keimbildner-Phasen oder Keatit-Mischkristall (KMK) in der Menge von maximal 20 %, bevorzugt maximal 10 %, besonders bevorzugt maximal 5%, des Kristallphasenanteils enthält.

9. Glaskeramik nach einem oder mehreren der vorherigen Ansprüche, welche bei einer Dicke von 4 mm einen Lichttransmissionsgrad (τᵥᵢₛ) aufweist von 0,5 bis 70 %, bevorzugt von 0,5 bis 40 %, besonders bevorzugt von 0,5 bis 30 %, ganz besonders bevorzugt von 0,5 bis 20 %.

10. Glaskeramik nach einem oder mehreren der vorherigen Ansprüche, wobei die Schmelze des Grünglases der Glaskeramik eine Viskosität von 200 dPas bei weniger als 1750°C, bevorzugt bei weniger als 1700°C, erreicht.

11. Glaskeramik nach einem oder mehreren der vorherigen Ansprüche mit einer thermischen Ausdehnung im Bereich von 20°C bis 700°C von 0 bis 0,41 ppm/K, bevorzugt von 0 - 0,35 ppm/K, besonders bevorzugt von 0 bis 0,3 ppm/K.

12. Verwendung einer Glaskeramik nach einem oder mehreren der vorherigen Ansprüche als Kochfläche, Kaminsichtscheibe, Grill- oder Bratfläche, Abdeckung von Brennelementen in Gasgrills, Backofensichtscheibe, insbesondere für Pyrolyseherde, Arbeits- oder Tischplatte in Küchen oder Laboren, Abdeckung für Beleuchtungsvorrichtungen, in Brandschutzverglasungen und als Sicherheitsglas, optional im Laminatverbund, und als Trägerplatte oder Ofenauskleidung in thermischen Prozessen, oder als rückseitige Abdeckung für mobile elektronische Geräte.

13. Verfahren zur Herstellung einer Glaskeramik nach einem oder mehreren der Ansprüche 1 bis 11, mit folgenden Schritten:
- Aufschmelzen der Rohstoff-Bestandteile, wobei die Schmelze des Grünglases bevorzugt bei Temperaturen von 1500 bis 1700 °C erfolgt
- Läutern der Schmelze des Grünglases, bevorzugt mit SnO₂,
- Heißformgebung zu Glaskeramik-Platten bei Temperaturen im Bereich der Verarbeitungstemperatur (V_{A}), bevorzugt bei einer Viskosität von 10⁴ dPas, besonders bevorzugt bei Temperaturen kleiner als 1350°C, wobei der Abstand von der Verarbeitungstemperatur (V_{A}) zur oberen Entglasungstemperatur (V_{A} - OEG) bevorzugt zwischen 20 und 100°C liegt,
- Keramisierung, die so schnell erfolgt und wobei die Temperatur so gewählt wird, dass die Umwandlung von Hochquarz-Mischkristall (HQMK) in Keatit-Mischkristall (KMK) vermieden wird.

## Claims

1. A transparent coloured glass ceramic, in particular an LAS glass ceramic, comprising high-quartz solid solution (HQ s.s.) as a main crystal phase and exhibiting thermal expansion of -1 to +1 ppm/K in the range from 20 °C to 700 °C, wherein the glass ceramic contains from 3.0 to 3.6 percent by weight of lithium oxide (Li₂O) as constituents and is coloured with 0.003 to 0.25 percent by weight of molybdenum oxide (MoO₃).

2. The glass ceramic according to claim 1, containing the colouring oxides CoO, NiO, Cr₂O₃, CuO, or Nd₂O₃ in amounts from 0 to less than 0.01 percent by weight each, and MnO₂ in an amount from 0 to less than 0.3 percent by weight.

3. The glass ceramic according to claims 1 or 2, containing the following constituents of alkaline earth oxides and ZnO, in percent by weight:
| | |
|---|---|
| BaO | 1.2 to 2.8 |
| MgO | 0 to less than 1 |
| CaO | 0 to less than 1 |
| ZnO | 1.2 to 2.5. |

4. The glass ceramic according to one or more of the preceding claims, refined with 0.1 to 0.6 percent by weight of tin oxide (SnO₂).

5. The glass ceramic according to one or more of the preceding claims, containing the following constituents, in percent by weight:
| | |
|---|---|
| SiO₂ | 62 to 68 |
| Al₂O₃ | 18.5 to 23 |
| Li₂O | 3.0 to 3.6, preferably 3.2 to 3.6 |
| MoO₃ | 0.003 to 0.25 |
| SnO₂ | 0.1 to 0.6 |
| BaO | 1.2 to 2.8 |
| MgO | 0 to less than 1, preferably 0.3 to less than 1 |
| ZnO | 1.2 to 2.5 |
| TiO₂ | 2.6 to 4.5 |
| ZrO₂ | 0.9 to 1.7 |
| B₂O₃ | 0 to 2 |
| P₂O₅ | 0 to 4 |
| Na₂O+K₂O | 0 to less than 1.5, preferably to less than 1 |
| CaO | 0 to less than 1 |
| SrO | 0 to less than 1 |
| Fe₂O₃ | 0 to 0.2, preferably to 0.15. |

6. The glass ceramic according to one or more of the preceding claims, wherein a ratio (BaO + ZnO) / MgO is in a range from 2.2 to 35, preferably in a range from 4.5 to 15, given in percent by weight in each case.

7. The glass ceramic according to one or more of the preceding claims, containing compounds including arsenic (As), antimony (Sb), cadmium (Cd), lead (Pb), halides or sulphur (S) in an amount from 0 to less than 0.5 percent by weight, preferably less than 0.1 percent by weight, most preferably less than 0.05 percent by weight.

8. The glass ceramic according to one or more of the preceding claims, comprising high-quartz solid solution (HQ s.s.) as the main crystal phase accounting for more than 80 % of the existent crystal phases, preferably more than 90 %, and including, as further crystal phases, only nucleation phases or keatite solid solution (K s.s.) in an amount of not more than 20 %, preferably not more than 10 %, most preferably not more than 5 % of the crystal phase fraction.

9. The glass ceramic according to one or more of the preceding claims, which, with a thickness of 4 mm, exhibits a light transmittance (τᵥᵢₛ) from 0.5 to 70 %, preferably from 0.5 to 40 %, more preferably from 0.5 to 30 %, most preferably from 0.5 to 20 %.

10. The glass ceramic according to one or more of the preceding claims, wherein the molten green glass of the glass ceramic reaches a viscosity of 200 dPa·s at less than 1750 °C, preferably at less than 1700 °C.

11. The glass ceramic according to one or more of the preceding claims, exhibiting a thermal expansion, in the range from 20 °C to 700 °C, of 0 to 0.41 ppm/K, preferably 0 to 0.35 ppm/K, most preferably 0 to 0.3 ppm/K.

12. Use of a glass ceramic according to one or more of the preceding claims as a cooking surface, fireplace window, grill or roasting surface, cover of fuel elements in gas grills, oven door window, especially for pyrolysis ovens, work surface or table top in kitchens or laboratories, cover for lighting devices, in fire-resistant glazing, and as a safety glass, optionally in a laminated composite, and as a support plate or furnace lining in thermal processes, or as a back cover for mobile electronic devices.

13. A method for producing a glass ceramic according to one or more of claims 1 to 11, comprising the steps of:
- melting the raw material components, wherein the melting of the green glass is preferably achieved at temperatures from 1500 to 1700 °C;
- refining the molten green glass, preferably using SnO₂;
- hot forming into glass ceramic panels at temperatures in the range of the processing temperature (V_{A}), preferably at a viscosity of 10⁴ dPa·s, more preferably at temperatures of less than 1350 °C, wherein a margin between the processing temperature (V_{A}) and the upper devitrification temperature (V_{A} - OEG) is preferably between 20 and 100 °C;
- ceramizing at a pace and at a temperature chosen so as to avoid conversion of high-quartz solid solution (HQ s.s.) into keatite solid solution (K s.s.).

## Revendications

1. Vitrocéramique teintée transparente, en particulier vitrocéramique LAS, présentant des cristaux mixtes de quartz β (HQMK) en tant que phase cristalline principale et une dilatation thermique, dans la plage allant de 20 °C à 700 °C, comprise entre -1 et +1 ppm/K, la vitrocéramique comportant, en tant que constituants, 3,0 à 3,6 pour cent en poids d'oxyde de lithium (Li₂O) et étant teintée avec 0,003 à 0,25 pour cent en poids d'oxyde de molybdène (MoO₃).

2. Vitrocéramique selon la revendication 1, qui contient les oxydes de production de couleur CoO, NiO, Cr₂O₃, CuO ou Nd₂O₃, respectivement en une quantité allant de 0 à une valeur inférieure à 0,03 pour cent en poids.

3. Vitrocéramique selon les revendications 1 ou 2, qui contient les constituants suivants d'oxydes d'alcalino-terreux et de ZnO, en pour cent en poids :
| | |
|---|---|
| BaO | 1,2 à 2,8 |
| MgO | 0 à inférieur à 1 |
| CaO | 0 à inférieur à 1 |
| ZnO | 1,2 à 2,5. |

4. Vitrocéramique selon une ou plusieurs des revendications précédentes, qui est affinée avec 0,1 à 0,6 pour cent en poids d'oxyde d'étain (SnO₂).

5. Vitrocéramique selon une ou plusieurs des revendications précédentes, qui contient les constituants suivants, en pour cent en poids :
| | |
|---|---|
| SiO₂ | 62 à 68 |
| Al₂O₃ | 18,5 à 2 3 |
| Li₂O | 3,0 à 3,6, de préférence 3,2 à 3,6 |
| MoO₃ | 0,003 à 0,25 |
| SnO₂ | 0,1 à 0,6 |
| BaO | 1,2 à 2,8 |
| MgO | 0 à inférieur à 1, de préférence 0,3 à inférieur à 1 |
| ZnO | 1,2 à 2,5 |
| TiO₂ | 2,6 à 4,5 |
| ZrO₂ | 0,9 à 1,7 |
| B₂O₃ | 0 à 2 |
| P₂O₅ | 0 à 4 |
| Na₂O+K₂O | 0 à inférieur à 1,5, de préférence inférieur à 1 |
| CaO | 0 à inférieur à 1 |
| SrO | 0 à inférieur à 1 |
| Fe₂O₃ | 0 à 0,2, de préférence à 0,15. |

6. Vitrocéramique selon une ou plusieurs des revendications précédentes, dans laquelle le rapport de (BaO + ZnO)/MgO, indiqué respectivement en pour cent en poids, se situe dans la plage allant de 2,2 à 35, de préférence dans la plage allant de 4,5 à 15.

7. Vitrocéramique selon une ou plusieurs des revendications précédentes, qui contient des composés d'arsenic (As), d'antimoine (Sb), de cadmium (Cd), de plomb (Pb), d'halogénures ou de soufre (S), en une quantité comprise entre 0 et moins de 0,5 pour cent en poids, de préférence moins de 0,1 pour cent en poids, et de manière particulièrement avantageuse inférieure à 0,05 pour cent en poids.

8. Vitrocéramique selon une ou plusieurs des revendications précédentes, qui présente des cristaux mixtes de quartz β (HQMK) en tant que phase cristalline principale, avec plus de 80 % des phases cristallines présentes, de préférence avec plus de 90 %, et, en tant que phases cristallines supplémentaires, uniquement des phases de nucléation ou des cristaux mixtes de kéatite (KMK) en une quantité d'au maximum 20 %, de préférence d'au maximum 10 %, et de manière particulièrement avantageuse d'au maximum 5 % de la part de phase cristalline.

9. Vitrocéramique selon une ou plusieurs des revendications précédentes, qui, pour une épaisseur de 4 mm, présente un facteur de transmission de la lumière (τᵥᵢₛ) allant de 0,5 à 70 %, de préférence de 0,5 à 40 %, de manière particulièrement avantageuse de 0,5 à 30 %, et notamment de 0,5 à 20 %.

10. Vitrocéramique selon une ou plusieurs des revendications précédentes, pour laquelle le bain de fusion du verre céramisable, de la vitrocéramique atteint une viscosité de 200 dPas, à moins de 1 750 °C, de préférence à moins de 1 700 °C.

11. Vitrocéramique selon une ou plusieurs des revendications précédentes, ayant une dilatation thermique, dans la plage allant de 20 °C à 700 °C, qui est comprise entre 0 et 0,41 ppm/K, de préférence entre 0 et 0,35 ppm/K, et de manière particulièrement avantageuse entre 0 et 0,3 ppm/K.

12. Utilisation d'une vitrocéramique selon une ou plusieurs des revendications précédentes, en tant que table de cuisson, vitre de cheminée, plaque pour grillades ou pour saisir des aliments, recouvrement des brûleurs de barbecues à gaz, vitre de four, notamment pour fours à pyrolyse, plan de travail ou de table dans des cuisines ou des laboratoires, recouvrement pour des dispositifs d'éclairage, élément de verres anti-feu et en tant que verre de sécurité, de manière facultative dans des structures composites stratifiées, et en tant que plaque de support ou de garnissage de four pour des procédés thermiques, ou en tant que recouvrement de la face arrière d'appareils électroniques mobiles.

13. Procédé de fabrication d'une vitrocéramique selon une ou plusieurs des revendications 1 à 11, comprenant les étapes suivantes :
- mise en fusion des constituants en matière brute, la fusion du verre céramisable s'effectuant de préférence à des températures allant de 1 500 à 1 700 °C,
- affinage du bain de fusion du verre céramisable, de préférence avec du SnO₂,
- formage à chaud pour obtenir des plaques de vitrocéramique, à des températures situées dans la plage de la température de mise en œuvre (V_{A}), de préférence avec une viscosité de 10⁴ dPas, et de manière particulièrement avantageuse à des températures inférieures à 1 350 °C, l'écart entre la température de mise en œuvre (V_{A}) et la température de dévitrification supérieure (V_{A} ― OEG) étant compris entre 20 et 100 °C,
- céramisation qui s'effectue de manière si rapide et dont la température est choisie de manière telle que la transformation des cristaux mixtes de quartz β (HQMK) en cristaux mixtes de kéatite (KMK) soit évitée.
